# EUROPEAN PATENT APPLICATION

(11) **EP 4 617 531 A1**
(43) Date of publication of application: **17.09.2025**
(21) Application number: 24773849.5
(22) Date of filing: 22.02.2024
(51) Int. Cl.: F16H 63/42, F16H 61/02, F16H 61/12

(54) **GEARSHIFT ACTUATOR ENDPOINT IDENTIFICATION METHOD AND SYSTEM, AND VEHICLE**

(30) Priority: 22.03.2023 CN 202310283686
(71) Applicant: Zhejiang Geely Holding Group Co., Ltd., Hangzhou, Zhejiang 310051 (CN); Yiwu Geely Automatic Transmission Co., Ltd., Yiwu Jinhua, Zhejiang 322003 (CN); Ningbo Geely Royal Engine Components Co., Ltd., Ningbo City, Zhejiang 315336 (CN); Aurobay Technology Co., Ltd, Ningbo, Zhejiang 315800 (CN)
(72) Inventor: GAO, Yang, Hangzhou, Zhejiang 310051 (CN); WANG, Ruiguang, Hangzhou, Zhejiang 310051 (CN); HUANG, Weishan, Hangzhou, Zhejiang 310051 (CN); LIU, Yiqiang, Hangzhou, Zhejiang 310051 (CN)
(74) Representative: Michalski Hüttermann & Partner Patentanwälte mbB
(86) International application number: PCT/CN2024/078031
(87) International publication number: WO 2024/193281

(57) **Abstract**

A method and system for identifying an endpoint of a gearshift actuator, and a vehicle. The method of identifying the endpoint of the gearshift actuator includes: pushing the gearshift actuator (1) in a first direction for a plurality of times to determine a first endpoint (6); pushing the gearshift actuator (1) in a second direction for a plurality of times to determine a second endpoint (5); determining a length of the gearshift actuator (1) based on a position of the first endpoint (6) and a position of the second endpoint (5); determining the second endpoint (5) as an initial endpoint of the gearshift actuator (1) when the length of the gearshift actuator (1) satisfies a preset length condition; and performing gear engagement for confirmation according to the initial endpoint, and determining the initial endpoint as the endpoint of the gearshift actuator (1) when a preset gear condition is satisfied.

## Description

### TECHNICAL FIELD

The present disclosure relates to the field of vehicle control technologies, and in particular, to a method and system for identifying an endpoint of a gearshift actuator, and a vehicle.

### BACKGROUND

A position detector is usually provided in a vehicle automatic transmission to detect an actual gear actuator position. Since a position of an endpoint of a gearshift actuator is crucial for determining a position of a gear, if a detected position of the endpoint does not match an actual position, a vehicle gearshift may be affected.

In an existing detection method, the gearshift actuator is usually first pushed to a side where the endpoint is located. When the gearshift actuator cannot continue to move, a value of the position detector at this time is detected, and is determined as the position of the endpoint of the gearshift actuator. However, if a sticking point is encountered during movement of the gearshift actuator, the sticking point may be misidentified as the endpoint of the gearshift actuator, resulting in that the detected position of the endpoint is inconsistent with the actual position.

### SUMMARY

The problem to be solved by the present disclosure is how to realize accurate detection for a position of an endpoint of a gearshift actuator.

In order to solve the above problem, the present disclosure provides a method and system for identifying an endpoint of a gearshift actuator, and a vehicle.

In a first aspect, the present disclosure provides a method of identifying an endpoint of a gearshift actuator, including:
pushing the gearshift actuator in a first direction for a plurality of times to determine a first endpoint;
pushing the gearshift actuator in a second direction for a plurality of times to determine a second endpoint, where the second direction is opposite to the first direction;
determining a length of the gearshift actuator based on a position of the first endpoint and a position of the second endpoint;
determining the second endpoint as an initial endpoint of the gearshift actuator when the length of the gearshift actuator satisfies a preset length condition; and
performing gear engagement for confirmation according to the initial endpoint, and determining the initial endpoint as the endpoint of the gearshift actuator when a preset gear condition is satisfied.

Optionally, pushing the gearshift actuator in the first direction for the plurality of times to determine the first endpoint includes:
step 110, pushing the gearshift actuator in the first direction until a value of a position detector remains unchanged for a preset duration, and pushing the gearshift actuator in the second direction by a preset distance;
step 120, repeating the step 110 at least once; and
step 130, pushing the gearshift actuator in the first direction until the value of the position detector remains unchanged for the preset duration, and using a current value of the position detector as the position of the first endpoint.

Optionally, pushing the gearshift actuator in the second direction for the plurality of times to determine the second endpoint includes:
step 210, pushing the gearshift actuator in the second direction until a value of a position detector remains unchanged for a preset duration, and pushing the gearshift actuator in the first direction by a preset distance;
step 220, repeating the step 210 at least once; and
step 230, pushing the gearshift actuator in the second direction until the value of the position detector remains unchanged for the preset duration, and using a current value of the position detector as the position of the second endpoint.

Optionally, determining the length of the gearshift actuator based on the position of the first endpoint and the position of the second endpoint includes:
calculating a difference between a value of a position detector corresponding to the position of the first endpoint and a value of the position detector corresponding to the position of the second endpoint to determine the length of the gearshift actuator.

Optionally, determining the second endpoint as the initial endpoint of the gearshift actuator when the length of the gearshift actuator satisfies the preset length condition includes: determining a length difference between the length of the gearshift actuator and a theoretical length of the gearshift actuator, and determining the second endpoint as the initial endpoint of the gearshift actuator when the length difference is less than or equal to a preset length difference threshold.

Optionally, determining the second endpoint as the initial endpoint of the gearshift actuator when the length of the gearshift actuator satisfies the preset length condition further includes:
when the length difference is greater than the preset length difference threshold, determining a detection failure of the endpoint and issuing a fault code for the detection failure.

Optionally, determining the initial endpoint as the endpoint of the gearshift actuator when the preset gear condition is satisfied includes:
determining the initial endpoint as the endpoint of the gearshift actuator when a slip of a synchronizer satisfies a preset slip condition, where the synchronizer is connected to the gearshift actuator.

Optionally, determining the initial endpoint as the endpoint of the gearshift actuator when the preset gear condition is satisfied further includes:
when the slip of the synchronizer does not satisfy the preset slip condition, determining a detection failure of the endpoint and issuing a fault code for the detection failure.

The present disclosure further provides a system for identifying an endpoint of a gearshift actuator, including a computer-readable storage medium storing a computer program and a processor, where when the computer program is read and run by the processor, the above method of identifying the endpoint of the gearshift actuator is implemented.

The present disclosure further provides a vehicle, including the above system for identifying the endpoint of the gearshift actuator.

In the present disclosure, the accurate limit position of the gearshift actuator is determined by pushing the gearshift actuator for a plurality of times, which effectively eliminates interference errors due to the presence of sticking points during movement of the gearshift actuator. Moreover, a rationality judgment is made on the length of the gearshift actuator, and when the length of the gearshift actuator is within a reasonable range, the second endpoint is determined as the initial endpoint of the gearshift actuator, and finally gear engagement is performed for confirmation according to the initial endpoint. This can ensure that the gearshift actuator and the position detector are installed properly, while ensuring that the gearshift actuator is not damaged, enabling the position of the endpoint more accurate.

### BRIEF DESCRIPTION OF DRAWINGS

FIG. 1 is a schematic flowchart of a method of identifying an endpoint of a gearshift actuator according to an embodiment of the present disclosure.
FIG. 2 is a schematic diagram of pushing of a gearshift actuator according to an embodiment of the present disclosure.
FIG. 3 is a schematic diagram of a position of an endpoint according to an embodiment of the present disclosure.
FIG. 4 is a flow block diagram of a method of identifying an endpoint of a gearshift actuator according to an embodiment of the present disclosure.
FIG. 5 is a schematic structural diagram of a gearshift actuator according to an embodiment of the present disclosure.

Description of reference numerals:
1-gearshift actuator, 2-limiting groove, 3-limiting pin, 4-position detector, 5-second endpoint, 6-first endpoint; A-second direction, B-first direction.

### DETAILED DESCRIPTION

To make the foregoing objectives, features, and advantages of the present disclosure more apparent and comprehensible, specific embodiments of the present disclosure will be described in detail below with reference to the accompanying drawings.

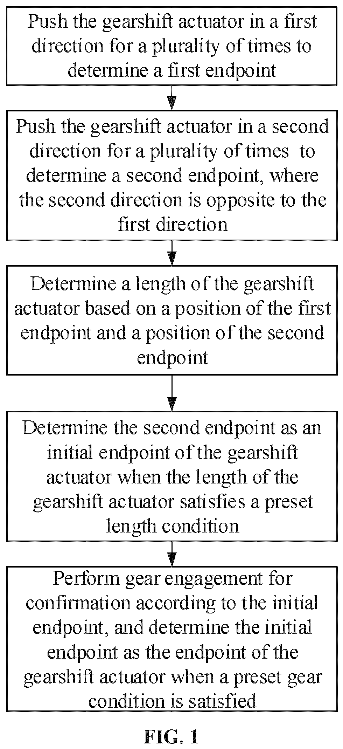

As shown in FIG. 1, an embodiment of the present disclosure provides a method of identifying an endpoint of a gearshift actuator, including:
pushing the gearshift actuator in a first direction for a plurality of times to determine a first endpoint.

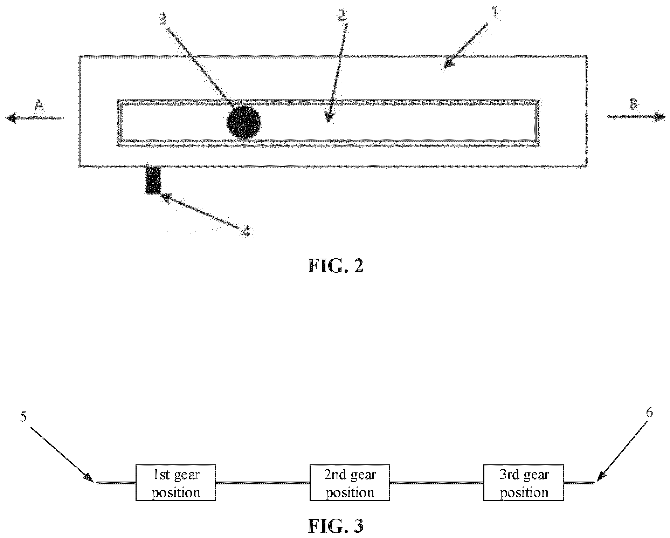

In particular, with reference to FIG. 2, by pushing the gearshift actuator 1 in the first direction (a direction B shown in FIG. 2) for a plurality of times, the first endpoint 6 as shown in FIG. 3 can be determined.

The method further includes: pushing the gearshift actuator in a second direction for a plurality of times to determine a second endpoint, where the second direction is opposite to the first direction.

In particular, with reference to FIG. 2, by pushing the gearshift actuator 1 in the second direction (a direction A shown in FIG. 2) for a plurality of times, the second endpoint 5 as shown in FIG. 3 can be determined.

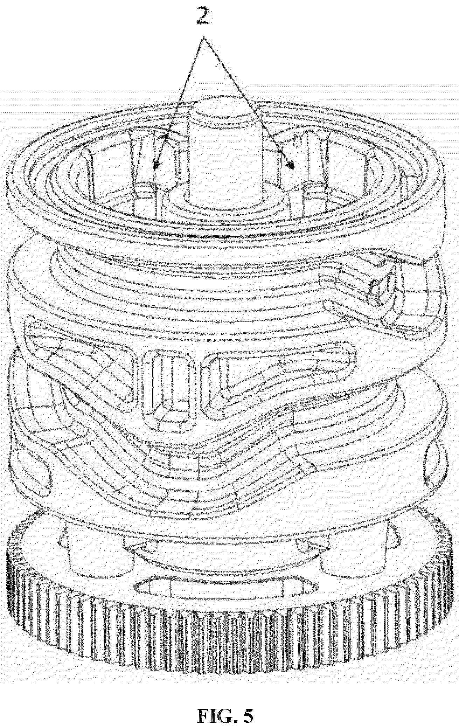

The gearshift actuator 1 is connected to a synchronizer. A limiting pin 3 is connected to a transmission housing, and the limiting pin 3 is not movable, but can only produce relative displacement with respect to a limiting groove 2. That is, the gearshift actuator 1 moves in a forward direction (that is, the second direction) and in a reverse direction (that is, the first direction) through cooperation between the limiting groove 2 and the limiting pin 3. The first direction and the second direction are two directions in which the gearshift actuator 1 can move during gear shifting, and the gearshift actuator 1 can move in the first direction or the second direction for gear shifting. FIG. 2 is a schematic diagram of a principle of pushing of the gearshift actuator, which involves structures only for illustration purposes to explain the principle. An actual structure of the gearshift actuator can be seen in FIG. 5, which is a schematic structural diagram of the gearshift actuator. A structure of the limiting groove 2 is as shown in FIG. 5.

The method further includes: determining a length of the gearshift actuator based on a position of the first endpoint and a position of the second endpoint.

In particular, since the position of the first endpoint 6 and the position of the second endpoint 5 are both limit positions, the length of the gearshift actuator can be determined from the position of the first endpoint 6 and the position of the second endpoint 5.

The method further includes: determining the second endpoint as an initial endpoint of the gearshift actuator when the length of the gearshift actuator satisfies a preset length condition.

In particular, a rationality judgment is made on the length of the gearshift actuator 1, and when the length of the gearshift actuator 1 satisfies the preset length condition, that is, the length of the gearshift actuator 1 is within a reasonable range, the second endpoint 5 is determined as the initial endpoint of the gearshift actuator 1. FIG. 3 illustrates sequentially the second endpoint 5, a 1st gear position, a 2nd gear position, a 3rd gear position, and the first endpoint 6. Therefore, the second endpoint 5 can be generally used as the initial endpoint to facilitate confirmation by engaging the 1st gear position.

The method further includes: performing gear engagement for confirmation according to the initial endpoint, and determining the initial endpoint as the endpoint of the gearshift actuator when a preset gear condition is satisfied.

In particular, the gear engagement is performed according to the initial endpoint. When the preset gear condition is satisfied, it is indicated that the gear is correct at this time, and the initial endpoint may be determined as the endpoint of the gearshift actuator. Through the gear engagement, it can be confirmed that the gearshift actuator 1 and the position detector 4 are installed properly, while ensuring that the gearshift actuator 1 is not damaged, enabling the position of the endpoint more accurate.

Optionally, pushing the gearshift actuator in the first direction for the plurality of times to determine the first endpoint includes steps 110, 120 and 130.

At step 110, the gearshift actuator is pushed in the first direction until a value of the position detector remains unchanged for a preset duration, and the gearshift actuator is pushed in the second direction by a preset distance. At step 120, the step 110 is repeated at least once.

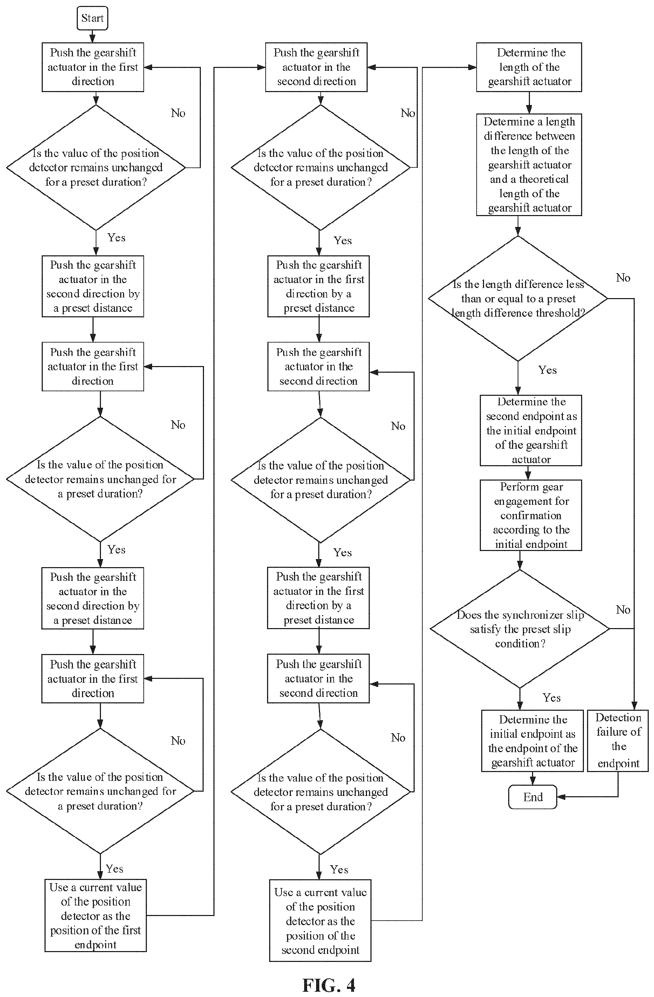

In particular, as shown in FIG. 2 and FIG. 4, the gearshift actuator 1 is first pushed in the first direction (the direction B shown in FIG. 2). When the value of the position detector 4 remains unchanged for the preset duration (for example, 100 ms), the gearshift actuator 1 is pushed in the second direction (the direction A shown in FIG. 2) by the preset distance, for example, 5% of the theoretical length of the gearshift actuator, which can avoid gear clashing, and effectively reduce the probability of re-clashing through a reverse movement, while preventing unintended engagement of another gear position. The above step is repeated at least once.

At step 130, the gearshift actuator is pushed in the first direction until the value of the position detector remains unchanged for the preset duration, and a current value of the position detector is used as the position of the first endpoint.

In particular, after the above step 110 is performed twice or more, the gearshift actuator 1 is pushed again in the first direction (the direction B shown in FIG. 2) until the value of the position detector 4 remains unchanged for the preset duration (for example, 100 ms), and the current value of the position detector 4 is used as the position of the first endpoint 6.

Optionally, pushing the gearshift actuator in the second direction for the plurality of times to determine the second endpoint includes steps 210, 220 and 230.

At step 210, the gearshift actuator is pushed in the second direction until the value of the position detector remains unchanged for a preset duration, and the gearshift actuator is pushed in the first direction by a preset distance. At step 220, the step 210 is repeated at least once.

In particular, as shown in FIG. 2 and FIG. 4, the gearshift actuator 1 is first pushed in the second direction (the direction A shown in FIG. 2). When the value of the position detector 4 remains unchanged for the preset duration (for example, 100 ms), the gearshift actuator 1 is pushed in the first direction (the direction B shown in FIG. 2) by the preset distance (for example, 5% of the theoretical length of the gearshift actuator). The above step is repeated at least once.

At step 230, the gearshift actuator is pushed in the second direction until the value of the position detector remains unchanged for the preset duration, and a current value of the position detector is used as the position of the second endpoint.

In particular, after the above step 210 is performed twice or more, the gearshift actuator 1 is pushed again in the second direction (the direction A shown in FIG. 2) until the value of the position detector 4 remains unchanged for the preset duration (for example, 100 ms), and the current value of the position detector 4 is used as the position of the second endpoint 5.

Optionally, determining the length of the gearshift actuator based on the position of the first endpoint and the position of the second endpoint includes:
calculating a difference between a value of the position detector corresponding to the position of the first endpoint and a value of the position detector corresponding to the position of the second endpoint to determine the length of the gearshift actuator.

In particular, as shown in FIG. 4, the difference between the value of the position detector 4 corresponding to the position of the first endpoint 6 and the value of the position detector 4 corresponding to the position of the second endpoint 5 is calculated, so that the length of the gearshift actuator 1 can be determined. For example, if the value of the position detector 4 corresponding to the position of the first endpoint 6 is Posn_6, and the value of the position detector 4 corresponding to the position of the second endpoint 5 is Posn_5, the length of the gearshift actuator 1 may be expressed as Posn_LenAct = Posn_6 - Posn_5.

Optionally, determining the second endpoint as the initial endpoint of the gearshift actuator when the length of the gearshift actuator satisfies the preset length condition includes: determining a length difference between the length of the gearshift actuator and a theoretical length of the gearshift actuator, and determining the second endpoint as the initial endpoint of the gearshift actuator when the length difference is less than or equal to a preset length difference threshold.

In particular, with reference to FIG. 4, for example, if the theoretical length of the gearshift actuator is expressed as Posn_LenTar, the length difference may be expressed as Posn_LenDelta=Posn_LenAct-Posn_LenTar. When the length difference is less than or equal to the preset length difference threshold, that is, Posn_LenDelta≤Posn_LenDeltaAllwd, the second endpoint 5 is determined as the initial endpoint of the gearshift actuator 1.

Optionally, determining the second endpoint as the initial endpoint of the gearshift actuator when the length of the gearshift actuator satisfies the preset length condition further includes:
when the length difference is greater than the preset length difference threshold, determining a detection failure of the endpoint and issuing a fault code for the detection failure.

In particular, with reference to FIG. 4, if the length difference is greater than the preset length difference threshold, that is, Posn_LenDelta>Posn_LenDeltaAllwd, it is determined that detection of the endpoint has failed, a failure flag bit is set to 1, and then the fault code for the detection failure is reported.

Optionally, determining the initial endpoint as the endpoint of the gearshift actuator when the preset gear condition is satisfied includes:
determining the initial endpoint as the endpoint of the gearshift actuator when a slip of a synchronizer satisfies a preset slip condition, where the synchronizer is connected to the gearshift actuator.

In particular, with reference to FIG. 4, the 1st gear position of the transmission is engaged, and when the slip of the synchronizer in the actual gear position is 0, it is determined that the initial endpoint is the actual endpoint of the gearshift actuator, where the synchronizer is connected to the gearshift actuator 1.

Optionally, determining the initial endpoint as the endpoint of the gearshift actuator when the preset gear condition is satisfied further includes:
when the slip of the synchronizer does not satisfy the preset slip condition, determining a detection failure of the endpoint and issuing a fault code for the detection failure.

In particular, as shown in FIG. 4, when the slip of the synchronizer is not 0, it is determined that detection of the endpoint has failed, and then the fault code for the detection failure is reported.

Another embodiment of the present disclosure provides a system for identifying an endpoint of a gearshift actuator, including a computer-readable storage medium storing a computer program and a processor, where when the computer program is read and run by the processor, the above method of identifying the endpoint of the gearshift actuator is implemented.

Another embodiment of the present disclosure provides a vehicle, including the above system for identifying the endpoint of the gearshift actuator.

Although the present disclosure is disclosed as above, the scope of protection of the present disclosure is not limited thereto. Those skilled in the art can make various changes and modifications without departing from the spirit and scope of the present disclosure, and these changes and modifications will fall within the scope of protection of the present disclosure.

## Claims

1. A method of identifying an endpoint of a gearshift actuator, comprising:
pushing the gearshift actuator in a first direction for a plurality of times to determine a first endpoint;
pushing the gearshift actuator in a second direction for a plurality of times to determine a second endpoint, wherein the second direction is opposite to the first direction;
determining a length of the gearshift actuator based on a position of the first endpoint and a position of the second endpoint;
determining the second endpoint as an initial endpoint of the gearshift actuator when the length of the gearshift actuator satisfies a preset length condition; and
performing gear engagement for confirmation according to the initial endpoint, and determining the initial endpoint as the endpoint of the gearshift actuator when a preset gear condition is satisfied.

2. The method of identifying the endpoint of the gearshift actuator according to claim 1, wherein pushing the gearshift actuator in the first direction for the plurality of times to determine the first endpoint comprises:
step 110, pushing the gearshift actuator in the first direction until a value of a position detector remains unchanged for a preset duration, and pushing the gearshift actuator in the second direction by a preset distance;
step 120, repeating the step 110 at least once; and
step 130, pushing the gearshift actuator in the first direction until the value of the position detector remains unchanged for the preset duration, and using a current value of the position detector as the position of the first endpoint.

3. The method of identifying the endpoint of the gearshift actuator according to claim 1, wherein pushing the gearshift actuator in the second direction for the plurality of times to determine the second endpoint comprises:
step 210, pushing the gearshift actuator in the second direction until a value of a position detector remains unchanged for a preset duration, and pushing the gearshift actuator in the first direction by a preset distance;
step 220, repeating the step 210 at least once; and
step 230, pushing the gearshift actuator in the second direction until the value of the position detector remains unchanged for the preset duration, and using a current value of the position detector as the position of the second endpoint.

4. The method of identifying the endpoint of the gearshift actuator according to claim 1, wherein determining the length of the gearshift actuator based on the position of the first endpoint and the position of the second endpoint comprises:
calculating a difference between a value of a position detector corresponding to the position of the first endpoint and a value of the position detector corresponding to the position of the second endpoint to determine the length of the gearshift actuator.

5. The method of identifying the endpoint of the gearshift actuator according to claim 1, wherein determining the second endpoint as the initial endpoint of the gearshift actuator when the length of the gearshift actuator satisfies the preset length condition comprises:
determining a length difference between the length of the gearshift actuator and a theoretical length of the gearshift actuator, and determining the second endpoint as the initial endpoint of the gearshift actuator when the length difference is less than or equal to a preset length difference threshold.

6. The method of identifying the endpoint of the gearshift actuator according to claim 5, wherein determining the second endpoint as the initial endpoint of the gearshift actuator when the length of the gearshift actuator satisfies the preset length condition further comprises:
when the length difference is greater than the preset length difference threshold, determining a detection failure of the endpoint and issuing a fault code for the detection failure.

7. The method of identifying the endpoint of the gearshift actuator according to claim 1, wherein determining the initial endpoint as the endpoint of the gearshift actuator when the preset gear condition is satisfied comprises:
determining the initial endpoint as the endpoint of the gearshift actuator when a slip of a synchronizer satisfies a preset slip condition, wherein the synchronizer is connected to the gearshift actuator.

8. The method of identifying the endpoint of the gearshift actuator according to claim 7, wherein determining the initial endpoint as the endpoint of the gearshift actuator when the preset gear condition is satisfied further comprises:
when the slip of the synchronizer does not satisfy the preset slip condition, determining a detection failure of the endpoint and issuing a fault code for the detection failure.

9. A system for identifying an endpoint of a gearshift actuator, comprising a computer-readable storage medium storing a computer program and a processor, wherein when the computer program is read and run by the processor, the method of identifying the endpoint of the gearshift actuator according to any one of claims 1 to 8 is implemented.

10. A vehicle, comprising the system for identifying the endpoint of the gearshift actuator according to claim 9.
